# EUROPEAN PATENT SPECIFICATION

(11) **EP 2 054 451 B1**
(45) Date of publication and mention of the grant of the patent: **18.09.2013**
(21) Application number: 07788219.9
(22) Date of filing: 03.08.2007
(51) Int. Cl.: C08F 10/00, C08F 4/647, C08F 4/651

(54) **PREPARATION OF A CATALYTIC PASTE FOR THE OLEFIN POLYMERIZATION**
HERSTELLUNG EINER KATALYSATORPASTE FÜR DIE OLEFINPOLYMERISATION
PRÉPARATION D'UNE PÂTE CATALYTIQUE POUR LA POLYMÉRISATION OLÉFINIQUE

(30) Priority: 25.08.2006 EP 06119571
(43) Date of publication of application: 06.05.2009
(73) Proprietor: Basell Poliolefine Italia S.r.l., 20127 Milano (IT)
(72) Inventor: PEDRIALI, Lorella, I-44010 Ferrara (IT); FLAMMINI, Roberto, I-44100 Ferrara (IT); BENETTI, Derenzio, I-44034 Ferrara (IT); FAIT, Anna, I-44100 Ferrara (IT); PATRONCINI, Giovanni, I-44100 Ferrara (IT)
(74) Representative: Sacco, Marco
(86) International application number: PCT/EP2007/058087
(87) International publication number: WO 2008/022900

(56) References cited:
- WO-A-00/47638

## Description

The present invention relates to a method for preparing a catalytic composition in the form of catalytic particles dispersed in a semi-fluid matrix, the catalytic composition being suitable to be transferred and fed into a reactor for the olefin polymerization.

The present invention also relates to a process for the polymerization of olefins carried out in the presence of a polymerization catalyst comprising a solid catalytic component dispersed in a semi-fluid matrix.

It is widely known in the art that catalytic components of the Ziegler/Natta type comprising a titanium compound supported on magnesium chloride show a high activity in the polymerization of olefins. These catalytic components are indeed the most extensively used in the polymerization of olefins such as ethylene, propylene, etc. and are obtained in a powder form by reacting a titanium compound comprising at least a titanium-halogen bond with a solid support comprising a magnesium halide.

In a continuous process for the olefin polymerization it is largely felt the need of continuously feeding the catalyst particles at a constant flow rate to the polymerization reactor. Furthermore, the solid catalytic components have to be transferred to the polymerization reactor without a significant modification of their morphology and other physical properties, such as porosity, surface area, etc., also trying to achieve a homogeneous distribution thereof inside the gas or liquid medium used as the carrier.

A method of transferring the solid catalyst particles to the polymerization apparatus consists in forming a suspension of the catalytic particles in a liquid hydrocarbon and then successively pumping the obtained suspension into the pressurized reaction system. However, this method does not allow an accurate dosage of the catalyst particles in the polymerization apparatus and moreover, it may cause the breaking of some catalytic particles, either during the stirring of the suspension, or during the subsequent pumping. The breaking of the catalyst with consequent formation of particles of reduced size (fines) is particularly detrimental, since the catalyst particles must have a predetermined morphology, which is strictly correlated to the morphology of the polymer targeted to be prepared.

In order to facilitate its dosage and transfer, the catalyst powder can be combined with a wax, which makes it possible continuously feeding a waxed catalyst into the polymerization reactor. By way of example, reference is made to US 4,158,571 and US 4,182,817 disclosing a method for feeding solid catalyst particles to a polymerization reaction system. These patents teach the preparation of a semi-solid paste containing dispersions of at least one functional material, such as a polymerization catalyst, uniformly dispersed throughout a continuous solid phase. Said continuous solid phase has the rheological features of a Bingham fluid and consists essentially of an intimate mixture of a wax and a liquid hydrocarbon. The preparation of this catalytic paste comprises a first step of heating and mixing together the desired proportions of a molten wax and a liquid hydrocarbon in stirred vessel, and successive step involving the addition of the finely-divided solid catalyst to the above obtained mixture. The mixture is agitated with sufficient intensity to disperse the finely-divided solid catalyst uniformly throughout the melt, after which the entire composition is cooled until it solidifies. Preferred waxes used in the above preparation method are petroleum waxes. Notwithstanding the obtained composition is useful to achieve an accurate dosage and transfer of the dispersed catalyst to the polymerization apparatus, the method described in US 4,158,571 and US 4,182,817 is such that little amounts of wax can easily penetrate inside the pores and on the surface of the catalyst particles: as a consequence, the obtained catalytic paste shows drawbacks in the successive step of activation with organo-aluminum compounds and also in case of prepolymerization (T=20-30°C), since the occlusion, even partial, of the catalyst pore and surface caused by the solidification of the wax generates problems in achieving a satisfying activation of the catalytic sites, which leads to a low catalyst activity in polymerization.

Other drawbacks are correlated with the preparation of a semi-solid catalytic paste. For instance, the method described in US 4,898,847 uses a paraffinic hydrocarbon with a melting point 50-70°C or an atactic polypropylene, which is deposited on a supported catalyst suspended in hydrocarbon solvent. Successively, according to the description of this patent, it is advantageous to remove said hydrocarbon solvent, for instance, by decantation or by evaporation with stirring, in order to achieve an uniform coating of the supported catalyst with the above paraffinic hydrocarbon. This additional step of evaporation leads to a considerable increase of the operative costs involved in the preparation of the above catalyst composition.

WO 00/47638 relates to a polymerization catalyst system obtained by a process comprising a first activation step, wherein a solid transition metal compound is contacted with a first organo-aluminum compound in the presence of a oil to give a first reaction mixture, and a second activation step including the contact of said first reaction mixture with a second organo-aluminum compound. According to an alternative embodiment, the first activation step can be carried out in the presence of an oil mixed together with a component selected from a wax, fat or solid paraffin. The aim of the process described in WO 00/47638 is to reach a mild activation of the solid transition metal compound by means of the organo-aluminum compound. By adding some oil to the first activation step a smooth, suppressed reaction between the solid transition metal compound and the first organo-aluminum compound is accomplished. The description of WO 00/47638 refers to the step of preactivating the catalyst components in the presence of oil and a wax/paraffin: this patent fails to provide an useful teaching on how to preserve the catalyst morphology in the line connecting the catalyst powder storage and the polymerization reactor.

It would be largely desirable to overcome the above drawbacks correlated with the prior art methods to prepare a catalytic paste, providing an alternative preparation method able to preserve the catalyst morphology throughout the line connecting the catalyst powder storage and the polymerization reactor.

The Applicant has now found that a continuous dosage and transfer of solid catalyst particles to a polymerization reactor can be successfully performed without substantially altering their morphology and porosity by the incorporation of the catalyst particles in a suitable semi-fluid matrix.

It is therefore a first object of the present invention a method for preparing a catalytic composition for the olefin polymerization in the form of a dispersion of catalyst particles in a semi-fluid matrix, characterized in that it comprises the steps of:
a) forming a suspension of catalyst particles in oil by loading under a continuous stirring dry catalyst powder into a tank containing said oil, the load velocity of the catalyst powder per m² of oil interface being less of 800 kg/h•m²;
b) adding under stirring a molten thickening agent having a melting point in a range from 30 to 70°C, while maintaining the catalyst suspension in oil at a temperature such that said thickening agent solidifies on contact with said suspension; the catalytic paste obtained from step b) having a catalyst concentration between 50 and 500g/l.

According to the invention, "oil interface" is intended as the surface separating the liquid oily phase from the above gaseous phase in the tank of step a), while maintaining the oil in a motionless condition. In case of a common tank with a circular cross section, the oil interface is therefore given by the area of the circle having the internal diameter of the tank as its diameter.

According to the method of the invention, a mixing tank is first filled with oil. Being the catalyst extremely sensitive to oxygen and moisture, the oil fed to the mixing tank is degassed by storage under inert atmosphere and dried by a nitrogen flow: this removes traces of humidity and oxygen.

The catalyst powder is stored inside a drum under an inert atmosphere and from this drum the catalyst is discharged and loaded into the tank containing the oil.

According to a preferred embodiment of the invention, the solid catalyst particles introduced into the tank containing oil of step a) are Ziegler-Natta catalytic components based on a titanium halide, preferably TiCl₄, supported on magnesium halide.

Oil and thickening agents used in the present invention are necessarily inert compounds towards the catalyst system, that is to say oil and thickening agents cannot react with the catalyst components, such as the solid component, the donor compounds and the catalyst activators.

The catalyst powder is added slowly to the oil in order to promote the immediate dispersion of the catalyst in oil and, above all, to avoid accumulations of solid catalyst on the oil upper surface. It has been observed that a high load velocity of the catalyst is detrimental in achieving an acceptable dispersion of catalyst particles in the oil, since it causes the agglomeration of the solid particles with formation of many lumps, not easily dispersible in the oil. Therefore, in step a) the catalyst load velocity per m² of oil interface is generally kept at a value of less than 800 kg/h•m², preferably in a range from 200 to 500 kg/h•m².

The above load velocity of the catalyst powder may be adjusted by means of a funnel-shape discharge at the bottom of the drum containing the catalyst powder. According to a preferred embodiment of the invention, the above load velocity of the catalyst is adjusted by means of an L-valve, in which the flow rate of catalyst entering the mixing tank of step a) is kept at the desired value by means of regulation of a nitrogen flow. The formation of the suspension of catalyst in oil (step a) is generally carried out under continuous stirring by keeping the temperature above 50°C, preferably in a range from from 60 to 90°C under an inert atmosphere. The feeding of oil and catalyst to step a) is such to form a suspension of catalyst particles in oil with a solid concentration ranging from 80 g/l to 500 g/l, preferably 150-350 g/l.

The stirring intensity of the suspension is preferably the minimum necessary to avoid the settling of the catalyst powder. The peripheral velocity of the stirring device is generally maintained at a value lower than 0.7 m/s, preferably comprised between 0.4 and 0.6 m/s.

Oil is defined as a hydrocarbon or hydrocarbons mixture, which is liquid at room temperature and with a relatively low vapor pressure. The oil used for preparing the catalyst suspension of step a) can be selected from mineral oils, synthetic oils, with the proviso of being inert towards the catalyst components.

Preferred mineral oils are paraffinic white oils and, among these, vaseline oils. White oils are colorless, odorless, tasteless mixtures of saturated paraffinic and naphthenic hydrocarbons. These nearly chemically inert oils are virtually free of nitrogen, sulfur, oxygen and aromatic hydrocarbons. Suitable white oils are OB22 AT, Winog 70, Fina Vestan A 360B and Shell Ondina 64.

Synthetic oils can be obtained, for instance, by the oligomerization of decene, fractionating the product to an average of 30 carbon atoms and successive hydrogenation.

It has been observed that a low viscosity of the oil contributes to maintain unchanged the particle size distribution of the catalytic particles during step a) and b) of the present invention. As a consequence, the dynamic viscosity of the oil at 20°C is preferably comprised between 10 and 400 cPs, more preferably between 20 and 200 cPs. Generally, suitable oils used in the present invention have a dynamic viscosity at 100°C comprised between 1 and 12 cPs, preferably between 2 and 10 cPs.

After the feeding of the catalyst powder in the oil, the mixture is maintained under stirring for a time preferably comprised between 30 minutes and 3 hours, in order to assure a complete wetting and dispersion of the catalyst particles. In the case the catalytic component contains a high amount of volatile compounds, step a) may be favorably carried out under vacuum.

Once prepared, the oil/catalyst suspension is preferably cooled at a temperature generally comprised between 2 and 25°C, before adding the molten thickening agent of step b), this component being previously degassed by storage under inert atmosphere to eliminate traces of humidity and oxygen.

The thickening agent used in the present invention is a solid or semi-solid substance at room temperature, having a melting point in the range from 30 and 70°C. Suitable compounds are selected from petrolatum and waxes with a melting point in the range from 30 and 70°C.

Petrolatum is a natural mixture of microcrystalline wax and oil, obtained by fractional distillation of petroleum, as the byproduct of the heaviest lubricating oil fraction. When fully refined it becomes microcrystalline wax.

The preferred waxes used in the present invention are paraffin waxes, in particular vaseline (commonly named also "vaseline grease"). Paraffin waxes contain C₁₈-C₇₅ hydrocarbons, mainly n-alkanes with lesser amounts of isoalkanes and cycloalkanes. Vaseline has a melting point comprised between 40 and 60°C and a dynamic viscosity at 50°C (molten phase) comprised between 30 and 300 cP.

The method of the invention preferably uses molten vaseline as the thickening agent of step b). Said component is fed into the tank containing the suspension of catalyst in oil at a feeding temperature in a range from 75° to 110°C, preferably from 85 to 105°C. The molten thickening agent is slowly fed while stirring the oil/catalyst mixture with a peripheral speed of the stirring device as mentioned for step a). Due to the low temperature of the catalyst suspension, the molten thickening agent solidifies almost instantaneously in flaky particles which disperse in the oil, further lubricating the overall system. The thermal capacity of the suspension is sufficient to ensure the instantaneous solidification of the thickening agent during its progressive feeding into the suspension. To this aim it is preferable to refrigerate the suspension of catalyst in oil during step b) to maintain its temperature in a range comprised between 2°C and 25°C, thus avoiding any increase of temperature which would hinder a prompt solidification of the thickening agent. At the end of the addition of the thickening agent, a semi-solid catalytic paste is obtained in which no phase separation (oil phase or solid phase) is observed.

The amount of molten thickening agent added during step b) is sufficient to form a stable semi-fluid matrix, in which the catalyst particles remain suspended. The weight ratio of thickening agent with reference to the total amount of oil and thickening agent is generally comprised between 0.15 and 0.5, with concentrations of catalyst in the catalytic paste between 50 and 500 g/l. Preferably, said weight ratio is comprised between 0.3 and 0.4, with catalyst concentrations between 200 and 300 g/l. It is clear that lower catalyst concentrations imply a higher weight ratio of thickening agent, since the catalyst itself acts as a thickener.

At the end of the addition of the thickening agent, the semifluid catalytic paste is further cooled, always under stirring, to a temperature generally lower than 25°C, preferably comprised between 0°C and 15°C. In these conditions the catalytic composition may be transferred in metering syringes suitable to allow the feeding of the catalyst to the reaction system with an accurately controlled flow rate.

The method according to the present invention allows prepare a semi-fluid catalytic paste with many correlated technical advantages.

Step a) of the invention is carried out with specific operative conditions, so as to assure a complete wetting of the catalyst particles, including the particle pores, so that the interposition of an oil layer hinders an accidental direct friction between the catalyst particles. This contributes to preserve the morphologic properties of the catalytic particles during the preparation of the catalytic composition, avoiding an undesired formation of excessively low size particles of polymer (fines) during the successive prepolymerization and polymerization of alpha-olefins.

Moreover, the addition of a thickening agent during step b) does not affect the surface and pores of the catalyst particles. The latter are therefore separated from the oil/thickening agent matrix by an oil layer, which is easily and quickly removable in the successive steps of catalyst activation, prepolymerization and polymerization.

Other advantages and features of the present invention are illustrated in the following detailed description with reference to the attached drawing, which is representative and not limitative of the scope of the invention.

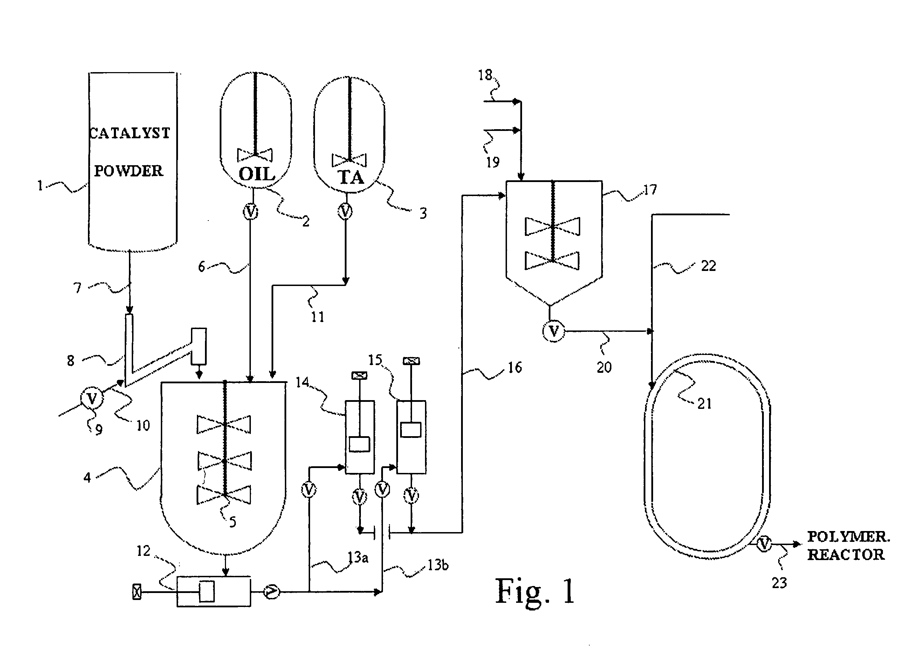

Figure 1 shows a preferred embodiment to carry out the present invention, wherein a L-valve is used to adjust the load velocity of the catalyst powder in step a).

Also the devices and lines suitable to convey the catalytic composition of the invention up to the polymerization reactor are schematically shown in Fig.1, as well as the steps of catalyst activation and prepolymerization.

With reference to Figure 1, a solid catalytic component is stored in the form of a dry powder inside the drum 1, while the vessel 2 contains oil and the vessel 3 contains the thickening agent (TA).

A tank 4 endowed with a stirring device 5 is used to prepare the catalyst suspension of step a). The tank 4 is first filled with the oil coming from the vessel 2 via line 6. Afterwards the catalyst particles are discharged from the drum 1 via line 7 and enter a L-valve 8, which is used for adjusting the velocity of catalyst load into the mixing tank 4. The flow rate of catalyst powder introduced into the mixing tank 4 is kept at the desired value by a control valve 9 adjusting a stream of nitrogen which enters the L-valve 8 via line 10.

When the feeding of the catalyst powder in the tank 4 is completed, the mixture is maintained under stirring for the suitable time in order to assure a complete wetting and dispersion of the catalyst particles in the oil. Once prepared, the oil/catalyst suspension is successively cooled, and then the molten thickening agent coming from the vessel 3 is fed into the tank 4 via line 11. The molten thickening agent is slowly fed, while continuously stirring the oil/catalyst mixture inside the tank 4. Due to the low temperature of the catalyst suspension, the molten thickening agent solidifies almost instantaneously in flaky particles which disperse in the oil.

When the feeding of the thickening agent is completed, a stable semi-solid catalytic paste is obtained in which no phase separation (oil phase or solid phase) is observed: the catalyst particles remain suspended in the semi-solid paste. The catalytic paste is then further cooled, always under stirring, at the suitable temperature for being transferred to the successive steps of catalyst activation and prepolymerization.

As shown in Fig.1 the catalytic paste is withdrawn from the mixing tank 4 avoiding the use of a discharge valve, e.g. a ball valve, but using a device capable of withdrawing the dispersion of catalyst in the semi-solid matrix without rough movements. A dosing syringe 12 is used for softly withdrawing the catalyst paste from the tank 4 and softly pushing it into line 13a and 13b. Moreover, a couple of two dosing syringes 14 and 15 is exploited for ensuring a continuous and delicate metering of catalytic paste to the successive step of catalyst activation. While the syringe 14 is filled with catalytic paste coming from line 13a, the second syringe 15 pushes and transfers the catalytic paste to line 16. Likewise, when the syringe 15 is filled with catalytic paste coming from line 13b, the first syringe 14 pushes and transfers the catalytic paste to line 16 and consequently to the activation vessel 17.

An organo-aluminum compound as the catalyst activator is fed via line 18 to the activation vessel 17. Also a hydrocarbon solvent, such as propane, is conveniently fed to the activation vessel 17 via line 19, optionally together with an electron donor compound.

The activated catalyst system is hence discharged from the activation vessel 17 and fed via line 20 to a loop reactor 21 used to carry out the prepolymerization of the catalyst. Line 20 merges into an olefin pick-up 22, which is the feeding line of the olefin to the loop reactor 21. The prepolymerized catalyst system is successively fed via line 23 to the polymerization reactor (not shown).

As explained in connection with Fig. 1, the semi-fluid catalytic paste prepared by means of the method of the invention is particularly suitable to be transferred and treated in one or more successive steps in order to have a controlled flow rate of catalyst system introduced into the polymerization reactor.

It is therefore a second object of the invention a process for the polymerization of olefins carried out in the presence of a solid polymerization catalyst, the process being characterized in that said solid polymerization catalyst is treated and transferred to the polymerization reactor by the following steps:
a) forming a suspension of catalyst particles in oil by loading under a continuous stirring dry catalyst powder into a tank containing said oil, the load velocity of the catalyst powder per m² of oil interface being less of 800 kg/h•m²;
b) adding under stirring a molten thickening agent having a melting point in a range from 30 to 70°C, while maintaining the catalyst suspension in oil at a temperature such that said thickening agent solidifies on contact with said suspension, whereby obtaining a catalytic paste with a catalyst concentration between 50 and 500 g/l;
c) contacting the catalytic paste coming from step b) with an organo-aluminum / compound in the presence of an inert hydrocarbon, optionally an electron donor compound, at a temperature from 5°C to 30°C;
d) polymerizing one or more α-olefins of formula CH₂=CHR, where R is hydrogen or a hydrocarbon radical having 1-12 carbon atoms, in one or more polymerization reactors in the presence of the catalyst coming from step c).

As regards the polymerization catalyst, a solid catalytic component based on a titanium compound supported on magnesium halide is preferably used to carry out the olefin polymerization of the present invention.

As shown in Fig 1, the catalytic paste is preferably withdrawn from step b) by a dosing syringe and is transferred and metered into the activation tank of step c) by means of two dosing syringes working in tandem.

A liquid hydrocarbon which is inert to the polymerization reaction, preferably a C₃-C₆ alkane, is generally fed to the activation vessel of step c). Said liquid hydrocarbon has the duplex function of removing the oil layer from the catalyst particles and also conveying the catalytic component to the polymerization reactor.

The activated catalyst withdrawn from step c) may be optionally subjected to prepolymerization in a loop reactor before the feeding to the polymerization reactor of step d).

As explained, method of the present invention implies that the presence of the thickening agent is confined to the semi-solid matrix, which maintains the catalyst particles in a stable dispersion. Different from the catalytic pastes described in the prior art patents, the thickening agent does not penetrate inside the pores and on the surface of the catalytic particles: this makes the catalyst particles to be efficiently activated by means of the contact with an organo-aluminum compound, able to reach the catalytic sites inside the particles pores. Moreover, the catalyst particles enter the reaction system in an immediately active form, even in the case of performing a prepolymerization of the catalyst system, which is usually carried out at a low temperature, in the range from 20 to 40°C.

The low concentration of solid catalyst with respect to monomers and the low amount of oil and thickening agent (if compared to the catalyst) make to introduce only traces of thickening agent and oil in the polymerization reactor, said traces not giving any problem during the olefin polymerization. The activated polymerization catalyst obtained from the above step c) is suitable to be introduced into any polymerization plant comprising one or more liquid-phase and/or gas-phase polymerization reactors. Further advantages and characteristics of the present invention will appear clear from the following examples, which are not to be intended to limit the scope of the invention.

### EXAMPLES

### Characterization

| | |
|---|---|
| **Dynamic viscosity** | ASTM D445-IP 71 |
| **Melt Index L (MIL)** | ASTM D 1238 method L |

### Determination of Solubility index (XS)

2.50 g of polymer were dissolved in 250 ml of o-xylene under stirring at 135 °C for 30 minutes, then the solution was cooled to 25 °C and after 30 minutes the insoluble polymer was filtered off. The resulting solution was evaporated in nitrogen flow and the residue was dried and weighed to determine the percentage of soluble polymer (%).

### Particle size distribution (PSD) of catalyst powder

The analysis of the catalyst particle size distribution was carried out with a laser analyzer model Malvern Instrument 2600. With this instrument, the measurement of the diameter distribution of single solid catalyst particles is based on the principle of optical diffraction of monochromatic laser light. The field of the instrument, covered trough three different lenses, is 1.2-564 µm.

The analysis comprises the addition of the sample, under nitrogen flow, to a measure cell containing hexane and provided with a stirrer and with a circulation pump having a flow rate comprised between 70 and 100 l/h. The measure is performed while the suspension is circulated. The central process unity of the analyzer processes the received signals and calculates the particle size distribution (PSD) of the sample on different diameter groups.

### Particle size distribution (PSD) of the polymer

Separation of polyolefin spheres over a succession of six sieves is performed for the determination of the particle size distribution (PSD), the mean particle diameter and the amount of fines (particles less than 500 µm in diameter).

### Preparation of the solid catalytic component

An adduct MgCl₂/3EtOH in a spherical form is prepared according to the method described in the Example 2 of US 4,399,054, but with a stirring speed of 3000 RPM instead of 10000 RPM. The adduct has been partially thermally dealcoholated at increasing temperature from 30°C to 180°C under N₂ flow, until a molar ratio EtOH/MgCl₂ of 1 was obtained.

In a stirred reactor, under nitrogen atmosphere, 625 g of TiCl₄ and 25 g of the partially dealcoholated adduct were added. The mixture was slowly heated to 100°C over 1 hour, adding diisobutylphthalate (DIBF) in a molar ratio Mg/DIBF=8 when the temperature reached 40°C. The temperature has been maintained at 100°C for two hours, the suspension has been decanted and the hot liquid has been removed by siphoning.

Then 550 ml of TiCl₄ have been added and the suspension was heated to 120°C for 1 hour. The suspension was let to settle and the hot liquid has been removed by siphoning. The solid residue has been washed six times with amounts of 200 ml of anhydrous hexane at 60°C and three times at room temperature.

Then the solid has been dried under vacuum. The finely-divided and spherical solid catalytic component had a Ti content of 2.2% by weight, porosity (Hg) of 0.261 cm³/g, a surface area of 66.5 m²/g and a particle average diameter of 75 µm, with a particle size distribution comprised between 20 and 128 µm.

The analysis of the particle size distribution of the catalyst has pointed out a percentage of particles having average diameter lower than 32 µm of 0.6% by weight.

### Example 1A - Preparation of the catalytic paste

### - STEP A) -

A stirred tank with a internal diameter of 0.8 m was used for preparing the suspension of solid catalyst in oil. This tank was provided with an anchor stirrer, an external water jacket for the temperature regulation, a thermometer and a cryostat.

White oil OB22 AT, marketed by Conqord Oil and having a dynamic viscosity of 2.0 cPs at 100°C was used in this example. 75 Kg of this white oil were charged into the stirred tank at room temperature. The oil temperature was increased up to reach the value of 70°C inside the stirred tank, while continuously stirring at a stirring velocity of 15 rpm.

Successively 40 Kg of dry catalyst powder obtained by the above described procedure were loaded to the stirred tank in a time of 20 minutes. Taking into account that the oil interface area was about 0.5 m², the catalyst load velocity per m² of oil interface was equal to 240 Kg/m²h, that is to say a value according to the teaching of the present invention.

At the end of the catalyst load, the catalyst suspension was continuously subjected to stirring at 15 rpm for 1 hour maintaining the temperature at 70°C. Afterwards, the catalyst suspension was cooled to 20°C by circulation of cooling water in the external jacket of the stirred tank.

### - STEP B) -

32.1 Kg of molten vaseline BF, produced and sold by Conqord Oil, were fed to the tank containing the catalyst suspension at a feeding temperature of 95°C. The addition of the molten vaseline was carried out from the top of the tank, while maintaining the tank under stirring at 15 rpm. At the end of the addition of the molten vaseline, the temperature of the catalytic paste was decreased to 10°C: at this temperature, the catalytic paste containing about 250 Kg/m³ of solid catalyst powder, was still sufficiently fluid to be discharged from the stirred tank by means of a dosing syringe.

The particle size distribution (PSD) analysis of the catalyst powder suspended in the semi-fluid catalytic paste was performed. To this aim, 10 g of catalytic paste, directly obtained from the bottom discharge of the stirred tank, were added to 50 cm³ of hexane, and the stirred suspension in hexane was analyzed.

The granulometric distribution of the catalyst in the catalytic paste gave the same results as those obtained just after the preparation of the solid catalytic component with a percentage of particles having average diameter < 32 µm of 0.6% by weight.

In Table 1 the main operative parameters of step A) and B) are summarized.

### Example 1B - Liquid-phase Polymerization

### Catalyst Activation and Prepolymerization

As shown with reference to the enclosed Fig. 1, the catalytic paste was withdrawn by the stirred tank by a dosing syringe and then continuosly transferred by means of two dosing syringes to a catalyst activation vessel. Triethylaluminium (TEAL) as the cocatalyst, and cyclohexylmethyldimethoxysilane (CHMMS) as an external donor were introduced into the activation vessel, with a weight ratio TEAL/(solid catalyst) of 10.5 and a weight ratio TEAL/CHMMS of 25. Propane as a diluent was also fed to the activation vessel 17. Propane has also the function of fostering the removal of the oil layer from the catalyst particles, so as to allow the cocatalyst to penetrate inside the pores and reach the catalyst sites.

The above components were pre-contacted in the activation vessel at a temperature of 10°C for 20 minutes.

The activated catalyst discharged from the activation vessel was continuously fed to a prepolymerization loop reactor together with liquid propylene. The prepolymerization in the loop reactor is operated at a temperature of 20°C and a residence time of 10 minutes. The prepolymeration yield is of about 150 g per gram of solid catalyst component.

### - Polymerization -

The prepolymerized catalyst was discharged from the loop prepolymerizator and was continuously fed to a liquid loop reactor to produce polypropylene.

Propylene was polymerized in the loop reactor using H₂ as the molecular weight regulator. No comonomer was fed to this reactor. Make-up propylene and hydrogen as molecular weight regulator were continuously fed to the loop reactor. The polymerization of propylene was carried out at a temperature of 70°C and at a pressure of 3.4 MPa.

A slurry of polypropylene in propylene was continuously discharged from the loop reactor and was subjected to heating in a jacketed pipe up to the temperature of 85°C before entering a flash drum, wherein the monomer evaporation and the polymer separation from the slurry were performed.

The catalyst mileage was of 40Kg of polymer per g of catalyst and the obtained polypropylene had a Melt Index MIL of 66 g/10', as indicated in Table 2.

A sample of the obtained polymer was dried at 70°C, under nitrogen flow for 3 hours, and then subjected to PSD analysis: spherical particles of polypropylene with an average diameter from 0.1 mm to 4 mm and an amount of fines (diameter < 0.5 mm) of 0.4% by weight were obtained.

### Example 2A - Preparation of the catalytic paste

### - STEP A) -

White oil Winog 70 (supplier Tudapetrol) having a dynamic viscosity of 8.5 cPs at 100°C was used in this example.

The same stirred tank of Example 1A was used for preparing the catalytic paste according to the method of the invention. 165.7 Kg of white oil Winog 70 were charged in the stirred tank at room temperature. The oil temperature was then increased up to reach the value of 70°C inside the stirred tank, while continuously stirring at a stirring velocity of 15 rpm.

Successively 85 Kg of dry catalyst powder were loaded to the stirred tank in a time of 20 minutes. Taking into account that the oil interface area was about 0.5 m², the catalyst load velocity per m² of oil interface was equal to 510 Kg/m²h, that is to say a value according to the teaching of the present invention.

At the end of the catalyst load, the catalyst suspension was continuously subjected to stirring at 15 rpm for 1.5 hour maintaining the temperature at 70°C. Afterwards, the catalyst suspension was cooled to 20°C by circulation of cooling water in the external jacket of the stirred tank.

### - STEP B) -

71 Kg of molten Vaseline Pionier 17122 (supplier Tudapetrol) were fed to the tank containing the catalyst suspension at a feeding temperature of 90°C. The addition of the molten vaseline was carried out from the top of the tank, while maintaining the tank under stirring at 15 rpm. At the end of the addition of the molten vaseline, the temperature of the catalytic paste was decreased to 10°C: at this temperature, the catalytic paste containing about 250 Kg/m³ of solid catalyst powder, was still sufficiently fluid to be discharged from the stirred tank by means of a dosing syringe.

The particle size distribution (PSD) analysis of the catalyst powder suspended in the semi-fluid catalytic paste was performed. The granulometric distribution of the catalyst in the catalytic paste gave the same results as those obtained just after the preparation of the solid catalytic component with a percentage of particles having average diameter < 32 µm of 0.02% by weight.

### Example 2B - Liquid-phase Polymerization

### Catalyst Activation and Prepolymerization

The catalytic paste was withdrawn by the stirred tank by a dosing syringe and then continuosly transferred by means of two dosing syringes to a catalyst activation vessel. Triethylaluminium (TEAL) as the cocatalyst, and cyclohexylmethyldimethoxysilane (CHMMS) as an external donor were introduced into the activation vessel, with a weight ratio TEAL/(solid catalyst) of 10.5 and a weight ratio TEAL/CHMMS of 25. Propane as a diluent was also fed to the catalyst activation vessel. The above components were pre-contacted in the activation vessel at a temperature of 10°C for 20 minutes.

The activated catalyst obtained from the activation vessel was continuously fed to a prepolymerization loop reactor together with liquid propylene. The prepolymerization in the loop reactor is operated at a temperature of 20°C and a residence time of 10 minutes. The prepolymeration yield is of about 150 g per gram of solid catalyst component.

### - Polymerization -

The prepolymerized catalyst was discharged from the prepolymerizator and was continuously fed to a liquid loop reactor to produce polypropylene.

Propylene was polymerized in the loop reactor using H₂ as the molecular weight regulator. Ethylene was also fed to the loop reactor in an amount of 0.3% by mol. Make-up propylene and hydrogen as molecular weight regulator were continuously fed to the loop reactor. The polymerization of propylene was carried out at a temperature of 70°C and at a pressure of 3.4 MPa.

A slurry of polypropylene in propylene was continuously discharged from the loop reactor and was subjected to heating in a jacketed pipe up to the temperature of 85°C before entering a flash drum, wherein the monomer evaporation and the polymer separation from the slurry were performed.

The catalyst mileage was of 29Kg of polymer per g of catalyst. The produced ethylene/propylene copolymer had a Melt Index MIL of 0.7 g/10' and a fraction soluble in xylene (XS) of 5.2 by wt, as shown in Table 2.

A sample of the obtained polymer was dried at 70°C, under nitrogen flow for 3 hours, and then subjected to PSD analysis: spherical particles of polypropylene with an average (diameter from 0.1 mm to 4 mm and an amount of fines (diameter<0.5 mm) of 0.3% by weight were obtained.

### Example 3A - Preparation of the catalytic paste

### - STEP A) -

The same stirred tank of Example 1A was used for preparing the catalytic paste according to the method of the invention.

126.8 Kg of white Oil OB22 AT were charged in the stirred tank at room temperature. The oil temperature was then increased up to reach the value of 70°C inside the stirred tank, while continuously stirring at a stirring velocity of 15 rpm.

Successively 85 Kg of dry catalyst powder obtained by the above described procedure were loaded to the stirred tank in a time of 40 minutes. Taking into account that the oil interface area was about 0.5 m², the catalyst load velocity per m² of oil interface was equal to 255 Kg/m²h, that is to say a value according to the teaching of the present invention.

At the end of the catalyst load, the catalyst suspension was continuously subjected to stirring at 15 rpm for 1.5 hour maintaining the temperature at 70°C. Afterwards, the catalyst suspension was cooled to 20°C by circulation of cooling water in the external jacket of the stirred tank.

### - STEP B) -

54.3 Kg of molten vaseline BF were fed to the tank containing the catalyst suspension at a feeding temperature of 90°C. The addition of the molten vaseline was carried out from the top of the tank, while maintaining the tank under stirring at 15 rpm. At the end of the addition of the molten vaseline, the temperature of the catalytic paste was decreased to 10°C: at this temperature, the catalytic paste containing about 300 Kg/m³ of solid catalyst powder, was still sufficiently fluid to be discharged from the stirred tank by means of a dosing syringe.

The particle size distribution (PSD) analysis of the catalyst powder suspended in the semi-fluid catalytic paste was performed. The granulometric distribution of the catalyst in the catalytic paste gave the same results as those obtained just after the preparation of the solid catalytic component with a percentage of particles having average diameter < 32 µm of 0.6% by weight.

### Example 3B - Gas-phase Polymerization

### Catalyst Activation and Prepolymerization

The catalytic paste was withdrawn by the stirred tank by a dosing syringe and then continuosly transferred by means of two dosing syringes to a catalyst activation vessel. Triethylaluminium (TEAL) as the cocatalyst, and dicyclopentyldimethoxysilane (DCPMS) as an external donor were introduced into the activation vessel, with a weight ratio TEAL/(solid catalyst) of 5 and a weight ratio TEAL/DCPMS of 5. Propane as a diluent was also fed to the activation vessel. The above components were pre-contacted in the activation vessel at a temperature of 25°C for 10 minutes.

The activated catalyst obtained from the activation vessel was continuously fed to a prepolymerization loop reactor together with a liquid stream of propylene and propane. The prepolymerization in the loop reactor is operated with a ratio C₃H₈/C₃H₆ of 1.28, at a temperature of 20°C and a residence time of 30 minutes. The prepolymeration yield is of about 200 g per gram of solid catalyst component.

### - Polymerization -

The prepolymerized catalyst was discharged from the loop reactor and was continuously fed to a gas-phase fluidized bed reactor to produce polypropylene.

Propylene was polymerized in the fluidized bed reactor using H₂ as the molecular weight regulator and in the presence of propane as inert diluent. No comonomer was fed to this reactor. Make-up propane, propylene and hydrogen as molecular weight regulator were fed to the recycle gas line of the reactor. The polymerization of propylene was carried out at a temperature of 80°C and at a pressure of 2.0 MPa.

The catalyst mileage was of 20Kg of polymer per g of catalyst. It can be seen from Table 2 that the polypropylene resin had a MIL of 7.6 g/10' and a fraction soluble in xylene (XS) of 4.8% by weight.

A sample of the obtained polymer was dried at 70°C, under nitrogen flow for 3 hours, and then subjected to PSD analysis: spherical particles of polypropylene with an average diameter from 0.1 mm to 4 mm and an amount of fines (diameter < 0.5 mm) of 2.2% by weight were obtained.

### Example 4A (Comparative) - Preparation of the catalytic paste

In the same stirred tank of the previous Examples 75 kg of white Oil OB22 AT at 60°C and 32.1 kg of molten vaseline BF at 90°C were fed, while maintaining the tank under stirring at 20 rpm. Oil and vaseline were mixed together for a time needed to reach an internal temperature in the tank of 70°C.

While decreasing the speed of the stirrer to 12 rpm, 40 Kg of the catalyst powder of example 1 were loaded to the stirred tank in a time of 20 minutes.

At the end of the addition of the catalyst powder, the stirrer was switched on again to 20 rpm and the catalyst suspension was homogenized for 1.5 hours at 70°C. A composition containing 250 Kg/m³ of catalyst was obtained. Then, the temperature of the catalytic paste was decreased to 10°C: at this temperature the catalytic paste was still sufficiently fluid to be discharged from the stirred tank by means of a dosing syringe.

The particle size distribution (PSD) analysis of the catalyst powder suspended in the semi-fluid catalytic paste was performed showing a percentage of catalyst particles having average diameter < 32 µm of 1.9% by weight instead of 0.6% by wt of the original catalyst powder. The procedure described in this comparative example does not preserve the original PSD of the catalyst particles.

### Example 4B (comparative) - Liquid phase Polymerization

### Catalyst Activation and Prepolymerization

The catalytic paste was withdrawn by the stirred tank by a dosing syringe and then continuously transferred by means of two dosing syringes to a catalyst activation vessel. Triethylaluminium (TEAL) as the cocatalyst, and cyclohexylmethyldimethoxysilane (CHMMS) as an external donor were fed to the activation vessel. The same operative conditions of Example 1 B were performed.

The activated catalyst obtained from the activation vessel was continuously fed to a prepolymerization loop reactor together with a liquid stream of propylene and propane: the same operative conditions of Example 1B for the prepolymerization were performed.

### - Polymerization -

The prepolymerized catalyst was discharged from the loop prepolymerizator and was continuously fed to a liquid loop reactor together with propylene as the monomer and hydrogen as the molecular weight regulator. The polymerization of propylene was carried out according to the same operative conditions of Example 1B (T=70°C, p=3.4 MPa).

A slurry of polypropylene in propylene was continuously discharged from the loop reactor and was subjected to heating in a jacketed pipe up to the temperature of 85°C before entering a flash drum, wherein the monomer evaporation and the polymer separation from the slurry were performed.

The catalyst mileage was of 40Kg of polymer per g of catalyst and the obtained polypropylene had a Melt Index MIL of 68 g/10', as indicated in Table 2.

A sample of the obtained polymer was dried at 70°C, under nitrogen flow for 3 hours, and then subjected to PSD analysis: spherical particles of polypropylene with an average diameter from 0.1 mm to 4 mm and a very high content of fines (diameter<0.5 mm) = 15% by weight were obtained.

### Example 5A (Comparative) - Preparation of the catalytic paste

### - STEP A) -

The same stirred tank of Example 1 A was used for preparing the catalytic paste.

59.7 Kg of white Oil OB22 AT were charged in the stirred tank at room temperature. The oil temperature was then increased up to reach the value of 70°C inside the stirred tank, while continuously stirring at a stirring velocity of 15 rpm.

Successively 40 Kg of dry catalyst powder obtained by the above described procedure were loaded to the stirred tank in a time of 4 minutes. Taking into account that the oil interface area was about 0.5 m², the catalyst load velocity per m² of oil interface was equal to 1200 Kg/m²h, outside the range claimed in the present invention.

At the end of the catalyst load, the catalyst suspension was continuously subjected to stirring at 15 rpm for 1 hour maintaining the temperature at 70°C. Afterwards, the catalyst suspension was cooled to 20°C by circulation of cooling water in the external jacket of the stirred tank.

### - STEP B) -

25.6 Kg of molten vaseline BF were fed to the tank containing the catalyst suspension at a feeding temperature of 95°C. The addition of the molten vaseline was carried out from the top of the tank, while maintaining the tank under stirring at 15 rpm. At the end of the addition of the molten vaseline, the temperature of the catalytic paste was decreased to 10°C: at this temperature, the catalytic paste containing about 300 Kg/m³ of solid catalyst powder, was still sufficiently fluid to be discharged from the stirred tank by means of a dosing syringe.

The particle size distribution (PSD) analysis of the catalyst powder suspended in the semi-fluid catalytic paste was performed. The granulometric distribution of the catalyst in the catalytic paste gave a negative result showing a high amount of fine particles: owing to particles breakage during the preparation of the paste the fraction having d<32 µm was equal to 3% by weight. Furthermore, other drawbacks involved by an unacceptable PSD of the catalyst were observed:
- agglomeration of fine particles in coarse particles clogging the feed lines of the catalyst activation vessel and prepolymerization reactor;
- increase of delivery pressure to achieve an efficient working of the dosing syringes.

**Table 1- Preparation of the catalytic paste**

| | OIL | Catalyst load velocity (Kg/m²h) | Thickening Agent | Catalyst concentration (Kg/m³) | PSD d<32 µm (% wt) |
|---|---|---|---|---|---|
| Example 1A | OB22 AT | 240 | Vaseline BF | 250 | 0.6 |
| Example 2A | Winog 70 | 510 | Vaseline Pionier | 250 | 0.02 |
| Example 3A | OB22 AT | 255 | Vaseline BF | 300 | 0.6 |
| Example 4A (comp.) | OB22 AT | - | Vaseline BF | 250 | 1.9 |
| Example 5A (Comp.) | OB22 AT | 1200 | Vaseline BF | 300 | 3.0 |

**Table 2 - Polymerization**

| | Temp. (°C) | Pressure (MPa) | Catalyst Mileage (kg/g cat.) | MIL (g/10') | XS (% wt) | PSD d<0.5 mm (% wt) |
|---|---|---|---|---|---|---|
| Example 1B | 70 | 3.4 | 40 | 66 | - | 0.4 |
| Example 2B | 70 | 3.4 | 29 | 0.7 | 5.2 | 0.3 |
| Example 3B | 80 | 2.0 | 20 | 7.6 | 4.8 | 2.2 |
| Example 4B (Comp.) | 70 | 3.4 | 40 | 68 | - | 15 |

## Claims

1. A method for preparing a catalytic composition for the olefin polymerization in the form of a dispersion of catalyst particles in a semi-fluid matrix, **characterized in that** it comprises the steps of:
a) forming a suspension of catalyst particles in oil by loading under a continuous stirring dry catalyst powder into a tank containing said oil, the load velocity of the catalyst powder per m² of oil interface being less of 800 kg/h·m²;
b) adding under stirring a molten thickening agent having a melting point in a range from 30 to 70°C, while maintaining the catalyst suspension in oil at a temperature such that said thickening agent solidifies on contact with said suspension;
wherein the catalytic paste obtained from step b) has a catalyst concentration comprised between 50 and 500 g/l.

2. The method according to claim 1, wherein the load velocity of catalyst powder in step a) is comprised in a range from 200 to 500 kg/h·m².

3. The method according to claim 1, wherein said load velocity in step a) is adjusted by means of an L-valve.

4. The method according to any of claims 1-3, wherein the formation of said suspension of catalyst in oil in step a) is carried out under continuous stirring by keeping the temperature in a range from 60 to 90°C under an inert atmosphere.

5. The method according to claim 1, wherein in step a) a suspension of catalyst particles in oil with a solid concentration ranging from 80 g/l to 500 g/l is prepared.

6. The method according to any of claims 1-5, wherein said oil is selected from mineral oils, synthetic oils.

7. The method according to claim 6, wherein said oil is a paraffinic white oil.

8. The method according to claims 6-7, wherein said oil has a dynamic viscosity at 100°C comprised between 1 and 12 centiPoise (cPs).

9. The method according to claim 1, wherein said catalyst particles introduced into the tank of step a) are Ziegler-Natta catalytic components based on a titanium halide supported on magnesium halide.

10. The method according to claim 1, wherein said molten thickening agent of step b) is selected from petrolatum, waxes with a melting point in the range from 30 to 70°C.

11. The method according to claim 10, wherein said molten thickening agent is selected from paraffin waxes.

12. The method according to claim 1, wherein said thickening agent is fed into then tank containing the catalyst/oil suspension at a feeding temperature in a range from 75° to 110°C.

13. The method according to any of claims 1-12, wherein said temperature at which the catalyst suspension in oil is kept during step b) ranges from 2°C to 25°C.

14. The method according to claim 1, wherein the weight ratio between said thickening agent and the total amount of oil and thickening agent is comprised between 0.15 and 0.5.

15. A process for the polymerization of olefins carried out in the presence of a solid polymerization catalyst, the process being **characterized in that** said solid polymerization catalyst is treated and transferred to the polymerization reactor by the following steps:
a) forming a suspension of catalyst particles in oil by loading under a continuous stirring dry catalyst powder into a tank containing said oil, the load velocity of the catalyst powder per m² of oil interface being less of 800 kg/h·m²;
b) adding under stirring a molten thickening agent having a melting point in a range from 30 to 70°C, while maintaining the catalyst suspension in oil at a temperature such that said thickening agent solidifies on contact with said suspension, whereby obtaining a catalytic paste with a catalyst concentration between 50 and 500 g/l;
c) contacting the catalytic paste coming from step b) with an organo-aluminum compound in the presence of an inert hydrocarbon, optionally an electron donor compound, at a temperature from 5°C to 30°C;
d) polymerizing one or more α-olefins of formula CH₂=CHR, where R is hydrogen or a hydrocarbon radical having 1-12 carbon atoms, in one or more polymerization reactors in the presence of the catalyst coming from step c).

16. The process according to claim 15, wherein said polymerization catalyst is a solid catalytic component based on a titanium compound supported on magnesium halide,

17. The process according to claim 15, wherein a catalytic paste is withdrawn from step b) by a dosing syringe and is transferred and metered into the activation tank of step c) by means of two dosing syringes working in tandem.

18. The process according to claim 15, wherein said inert hydrocarbon of step c) is a C₃-C₆ alkane.

19. The process according to claim 15, wherein the catalyst withdrawn from step c) is subjected to prepolymerization in a loop reactor before the feeding to step d).

## Patentansprüche

1. Verfahren zur Herstellung einer katalytischen Zusammensetzung zur Olefinpolymerisation in der Form einer Dispersion aus Katalysatorpartikeln in einer halbflüssigen Matrix, **dadurch gekennzeichnet, dass** es die folgenden Schritte umfasst:
a) Bilden einer Suspension aus Katalysatorpartikeln in Öl durch Laden eines trockenen Katalysatorpulvers unter kontinuierlichem Rühren in einen Behälter mit dem Öl, wobei die Ladungsgeschwindigkeit des Katalysatorpulvers pro m² Ölgrenzfläche weniger als 800 kg/h_{*}m² beträgt;
b) Zufügen eines geschmolzenen Verdickungsmittels mit einem Schmelzpunkt in einem Bereich von 30 bis 70 °C unter Rühren, während die Katalysatorsuspension in Öl bei einer Temperatur dergestalt aufrechterhalten wird, dass sich das Verdickungsmittel bei Kontakt mit der Suspension verfestigt, wobei die aus Schritt b) erhaltene Katalysatorpaste eine Katalysatorkonzentration zwischen 50 und 500 g/l umfasst.

2. Verfahren nach Anspruch 1, wobei die Ladungsgeschwindigkeit des Katalysatorpulvers in Schritt a) in einem Bereich von 200 bis 500 kg/h*m² liegt.

3. Verfahren nach Anspruch 1, wobei die Ladungsgeschwindigkeit in Schritt a) durch ein L-Ventil eingestellt wird.

4. Verfahren nach einem der Ansprüche 1 bis 3, wobei die Bildung der Suspension des Katalysators in Öl in Schritt a) unter kontinuierlichem Rühren bei Aufrechterhaltung der Temperatur im Bereich von 60 bis 90 °C unter einer inerten Atmosphäre durchgeführt wird.

5. Verfahren nach Anspruch 1, wobei in Schritt a) eine Suspension aus Katalysatorpartikeln in Öl mit einer Feststoffkonzentration im Bereich von 80 g/l bis 500 g/l hergestellt wird.

6. Verfahren nach einem der Ansprüche 1 bis 5, wobei das Öl aus Mineralölen und synthetischen Ölen ausgewählt wird.

7. Verfahren nach Anspruch 6, wobei das Öl ein paraffinisches Weißöl ist.

8. Verfahren nach den Ansprüchen 6 bis 7, wobei das Öl eine dynamische Viskosität bei 100 °C zwischen 1 und 12 Centipoise (cPs) aufweist.

9. Verfahren nach Anspruch 1, wobei die in den Behälter von Schritt a) eingetragenen Katalysatorpartikel Ziegler-Natta-Katalysatorkomponenten basierend auf einem auf Magnesiumhalogenid geträgerten Titanhalogenid sind.

10. Verfahren nach Anspruch 1, wobei das geschmolzene Verdickungsmittel aus Schritt b) aus Petrolat und Wachsen mit einem Schmelzpunkt im Bereich von 30 bis 70 °C ausgewählt ist.

11. Verfahren nach Anspruch 10, wobei das geschmolzene Verdickungsmittel aus Paraffinwachsen ausgewählt ist.

12. Verfahren nach Anspruch 1, wobei das Verdickungsmittel in den Behälter mit dem Katalysator/der Ölsuspension bei einer Eintragstemperatur im Bereich von 75 bis 110 °C eingetragen wird.

13. Verfahren nach einem der Ansprüche 1 bis 12, wobei die Temperatur, bei der die Katalysatorsuspension in Öl während Schritt b) gehalten wird, im Bereich von 2 bis 25 °C liegt.

14. Verfahren nach Anspruch 1, wobei das Gewichtsverhältnis zwischen dem Verdickungsmittel und der Gesamtmenge von Öl und Verdickungsmittel zwischen 0,15 und 0,5 liegt.

15. Verfahren zur Polymerisation von Olefinen, das in Gegenwart eines festen Polymerisationskatalysators durchgeführt wird, wobei das Verfahren **dadurch gekennzeichnet ist, dass** der feste Polymerisationskatalysator mittels der folgenden Schritte behandelt und zu dem Polymerisationsreaktor überführt wird:
a) Bilden einer Suspension aus Katalysatorpartikeln in Öl durch Laden eines trockenen Katalysatorpulvers unter kontinuierlichem Rühren in einen Behälter mit dem Öl, wobei die Ladungsgeschwindigkeit des Katalysatorpulvers pro m² Ölgrenzfläche weniger als 800 kg/h*m² beträgt;
b) Zufügen eines geschmolzenen Verdickungsmittels mit einem Schmelzpunkt in einem Bereich von 30 bis 70 °C unter Rühren, während die Katalysatorsuspension in Öl bei einer Temperatur dergestalt aufrechterhalten wird, dass sich das Verdickungsmittel bei Kontakt mit der Suspension verfestigt; wobei eine Katalysatorpaste mit einer Katalysatorkonzentration zwischen 50 und 500 g/l erhalten wird.
c) Inkontaktbringen der Katalysatorpaste aus Schritt b) mit einer Organoaluminiumverbindung bei Vorliegen eines inerten Kohlenwasserstoffs, gegebenenfalls einer Elektronendonatorverbindung, bei einer Temperatur von 5 bis 30 °C;
d) Polymerisieren von einem oder mehr α-Olefin(en) der Formel CH₂=CHR, wobei R Wasserstoff oder ein Kohlenwasserstoffrest mit 1 bis 12 Kohlenstoffatom(en) ist, in einem oder mehr Polymerisationsreaktor(en) in Gegenwart des aus Schritt c) kommenden Katalysators.

16. Verfahren nach Anspruch 15, wobei der Polymerisationskatalysator eine feste katalytische Komponente basierend auf einer auf Magnesiumhalogenid geträgerten Titanverbindung ist.

17. Verfahren nach Anspruch 15, wobei eine Katalysatorpaste mittels einer Dosierspritze aus Schritt b) abgezogen wird und mittels zwei zusammen arbeitenden Dosierspritzen in den Aktivierungsbehälter von Schritt c) übertragen und dosiert wird.

18. Verfahren nach Anspruch 15, wobei der inerte Kohlenwasserstoff von Schritt c) ein C₃- bis C₆-Alkan ist.

19. Verfahren nach Anspruch 15, wobei der aus Schritt c) abgezogene Katalysator vor dem Eintrag in Schritt d) einer Vorpolymerisation in einem Schlaufenreaktor unterzogen wird.

## Revendications

1. Procédé de préparation d'une composition catalytique pour la polymérisation d'oléfines sous forme d'une dispersion de particules catalytiques dans une matrice semi-fluide, **caractérisé en ce qu'**il comprend les étapes de :
a) formation d'une suspension de particules catalytiques dans de l'huile par chargement sous agitation continue d'une poudre catalytique sèche dans une cuve contenant ladite huile, la vitesse de chargement de la poudre catalytique par m² de l'interface de l'huile étant inférieure à 800 kg/h*m² ;
b) addition sous agitation d'un agent épaississant fondu présentant un point de fusion dans une plage de 30 à 70°C, tout en maintenant la suspension catalytique dans l'huile à une température telle que ledit agent épaississant se solidifie au contact de ladite suspension ;
dans lequel la pâte catalytique obtenue dans l'étape b) présente une concentration en catalyseur comprise entre 50 et 500 g/l.

2. Procédé selon la revendication 1, la vitesse de chargement de la poudre catalytique dans l'étape a) étant comprise dans une plage de 200 à 500 kg/h*m².

3. Procédé selon la revendication 1, ladite vitesse de chargement dans l'étape étape a) étant ajustée au moyen d'une vanne L.

4. Procédé selon l'une quelconque des revendications 1-3, la formation de ladite suspension de catalyseur dans de l'huile dans l'étape a) étant réalisée sous agitation continue en maintenant la température dans une plage de 60 à 90°C sous une atmosphère inerte.

5. Procédé selon la revendication 1, une suspension de particules catalytiques dans de l'huile présentant une concentration en solides dans une plage de 80 g/l à 500 g/l étant préparée dans l'étape a).

6. Procédé selon l'une quelconque des revendications 1-5, ladite huile étant choisie parmi les huiles minérales, les huiles synthétiques.

7. Procédé selon la revendication 6, ladite huile étant une huile de paraffine blanche.

8. Procédé selon les revendications 6-7, ladite huile présentant une viscosité dynamique à 100°C comprise entre 1 et 12 centipoises (cP).

9. Procédé selon la revendication 1, lesdites particules catalytiques introduites dans la cuve de l'étape a) étant des composants catalytiques de Ziegler-Natta à base d'halogénure de titane supporté sur de l'halogénure de magnésium.

10. Procédé selon la revendication 1, ledit agent épaississant fondu de l'étape b) étant choisi parmi la vaseline, les cires présentant un point de fusion dans la plage de 30 à 70°C.

11. Procédé selon la revendication 10, ledit agent épaississant fondu étant choisi parmi les cires de paraffine.

12. Procédé selon la revendication 1, ledit agent épaississant étant alimenté dans la cuve contenant la suspension catalyseur/huile à une température d'alimentation dans une plage de 75 à 110°C.

13. Procédé selon l'une quelconque des revendications 1-12, ladite température à laquelle la suspension catalytique dans l'huile est conservée pendant l'étape b) se situant dans une plage de 2°C à 25°C.

14. Procédé selon la revendication 1, le rapport pondéral entre ledit agent épaississant et la quantité totale d'huile et d'agent épaississant étant compris entre 0,15 et 0,5.

15. Procédé de polymérisation d'oléfines réalisé en présence d'un catalyseur de polymérisation solide, le procédé étant **caractérisé en ce que** ledit catalyseur de polymérisation solide est traité et transféré dans le réacteur de polymérisation par les étapes suivantes :
a) formation d'une suspension de particules catalytiques dans de l'huile par chargement sous agitation continue d'une poudre catalytique sèche dans une cuve contenant ladite huile, la vitesse de chargement de la poudre catalytique par m² de l'interface d'huile étant inférieure à 800 kg/h*m² ;
b) addition sous agitation d'un agent épaississant fondu présentant un point de fusion dans une plage de 30 à 70°C, tout en maintenant la suspension catalytique dans l'huile à une température telle que ledit agent épaississant se solidifie au contact de ladite suspension, obtenant ainsi une poudre catalytique présentant une concentration en catalyseur entre 50 et 500 g/l;
c) mise en contact de la pâte catalytique venant de l'étape b) avec un composé organique de l'aluminium en présence d'un hydrocarbure inerte, avec éventuellement un composé donneur d'électrons, à une température de 5°C à 30°C ;
d) polymérisation d'une ou plusieurs α-oléfines de formule CH₂=CHR, R représentant hydrogène ou un radical hydrocarboné comportant 1-12 atomes de carbone, dans un ou plusieurs réacteurs de polymérisation en présence du catalyseur venant de l'étape c).

16. Procédé selon la revendication 15, ledit catalyseur de polymérisation étant un composant catalytique solide à base d'un composé de titane supporté sur de l'halogénure de magnésium.

17. Procédé selon la revendication 15, une pâte catalytique étant soutirée de l'étape b) par une seringue de dosage et étant transférée et dosée dans la cuve d'activation de l'étape c) au moyen de deux seringues de dosage travaillant en tandem.

18. Procédé selon la revendication 15, ledit hydrocarbure inerte de l'étape c) étant un C₃-C₆-alcane.

19. Procédé selon la revendication 15, le catalyseur soutiré de l'étape c) étant soumis à une prépolymérisation dans un réacteur à boucle avant l'alimentation dans l'étape d).
